(19) **Europäisches Patentamt**
**European Patent Office**
**Office européen des brevets**

(11) **EP 2 619 527 B1**

(12) **EUROPÄISCHE PATENTSCHRIFT**

(45) Veröffentlichungstag und Bekanntmachung des Hinweises auf die Patenterteilung:
**06.08.2014 Patentblatt 2014/32**

(51) Int Cl.:
***G01B 11/27*** *(2006.01)*

(21) Anmeldenummer: **11771008.7**

(22) Anmeldetag: **21.09.2011**

(86) Internationale Anmeldenummer:
**PCT/EP2011/004716**

(87) Internationale Veröffentlichungsnummer:
**WO 2012/038074 (29.03.2012 Gazette 2012/13)**

(54) **VERFAHREN UND ANORDNUNG ZUR VERMESSUNG UND PRÜFUNG EINES FAHRZEUGRAHMENS**

METHOD AND ARRANGEMENT FOR MEASURING AND TESTING A VEHICLE FRAME

PROCÉDÉ ET SYSTÈME PERMETTANT DE MESURER ET DE CONTRÔLER LE CHÂSSIS D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2011 DE 102011015172**
**27.09.2010 DE 102010046543**
**23.09.2010 DE 102010046176**

(43) Veröffentlichungstag der Anmeldung:
**31.07.2013 Patentblatt 2013/31**

(73) Patentinhaber: **Haweka AG**
**30938 Burgwedel (DE)**

(72) Erfinder:
• **WARKOTSCH, Dirk**
**30938 Burgwedel/Wettmar (DE)**

• **EBERLE, Alexander**
**87435 Kempten (DE)**
• **JANZ, Tilo**
**30938 Burgwedel/Kleinburgwedel (DE)**
• **SCHENITZKI, Harald**
**30826 Garbsen (DE)**

(74) Vertreter: **Von Rohr Patentanwälte Partnerschaft mbB**
**Patentanwälte Partnerschaft**
**Rüttenscheider Straße 62**
**45130 Essen (DE)**

(56) Entgegenhaltungen:
**US-A- 4 691 443       US-A- 5 207 002**
**US-A1- 2008 072 444**

EP 2 619 527 B1

**Beschreibung**

Die Erfindung betrifft ein Verfahren und eine Anordnung zur Vermessung und Prüfung eines Fahrzeugrahmens, insbesondere eines Lkw- oder Busrahmens.

Aus der US 5 207 002 A ist ein Verfahren zur Vermessung eines Fahrzeugrahmens und zur Bestimmung der Mittellinie bekannt, wobei eine einen Laserscanner aufweisende Messeinrichtung vor dem Rahmen angeordnet und Laserstrahlung in Richtung zum Rahmen auf einen Träger mit einem zentralen Target und auf weitere zusätzliche Targets abgestrahlt wird. Der Träger wird auf gegenüberliegenden Längsseiten des Rahmens eingehängt und die zusätzlichen Targets sind auf gegenüberliegenden Längsseiten des Rahmens angeordnet.

Aus der US 2008/072444 A1 ist ein optisches System zur Vermessung und Prüfung eines Fahrzeugrahmens bekannt, dass eine Anzeigeeinrichtung, die manuell geführt wird, oder magnetische Targets, die an den Seiten des Fahrzeugs angeordnet werden, benutzt.

Das Dokument US 4 691 443 A offenbart ein System zur Rahmenvermessung unter Verwendung eines Messrahmens, an dem Lasermesseinrichtungen bewegbar befestigt sind.

Aus dem Stand der Technik sind zudem Verfahren zur Vermessung und Prüfung von Fahrzeugrahmen bekannt, wobei an einer Felge eines Fabzeugrades von außen ein Achsmesshalter für eine Laserquelle und für eine Messskala befestigt wird. Von außen an dem Rahmen wird ein Reflektor befestigt, der einen von der Laserquelle ausgesandten Laserstrahl in Richtung zur Messskala an dem Achsmesshalter reflektiert. Wird der Reflektor an unterschiedlichen Stellen des Rahmens befestigt und an jeder Stelle eine Laserstrahlmessung vorgenommen, kann aus der Abweichung der Laserauftrittspunkte auf der Messskala auf eine Deformation des Rahmens geschlossen werden. Zur Vermessung des Fahrzeugrahmens sind auf jeder Längsseite eine entsprechende Laserquelle mit einer Messskala und einem Reflektor vorgesehen.

Von Nachteil bei den bekannten Verfahren zur Vermessung und Prüfung von Fahrzeugrahmen ist, dass zum Anbringen des Reflektors an dem Rahmen gegebenenfalls Anbauteile am Rahmen entfernt werden müssen, was arbeitsund zeitaufwendig ist. Im Übrigen lässt sich der seitlich über den Rahmen weit überstehende Reflektor in Längsrichtung des Rahmens nicht an jeder Stelle an dem Rahmen befestigen. Da die Laserquelle über die Fahrzeugfelge nach außen übersteht, muss auch der Reflektor entsprechend weit nach außen reichen, was bei bestimmten Deformationen des Rahmens zu Messfehlern bei der Rahmenvermessung führen kann. Dies gilt insbesondere dann, wenn auf beiden Fahrzeuglängsseiten entsprechende Messeinrichtungen vorgesehen sind, um den Rahmen vollständig, das heißt auf beiden Längsseiten zu vermessen. Messfehler können dann insbesondere auftreten, wenn der Rahmen um eine vertikale Achse (Hochachse) des Fahrzeuges und/oder um die Längsachse verbogen ist.

Ein Messsystem für Radwinkel und für Positionen der Chassiseinheiten eines Kraftfahrzeuges ist aus der DE 695 22 937 T2 bekannt.

Aufgabe der vorliegenden Erfindung ist es, ein Verfahren und eine Anordnung zur Vermessung und Prüfung eines Fahrzeugrahmens zur Verfügung zu stellen, die eine wenig zeit- und arbeitsaufwändige Vermessung und Prüfung der Rahmengeometrie zulassen und sich durch eine hohe Messgenauigkeit bei der Vermessung und Prüfung auszeichnen.

Die vorgenannte Aufgabe wird durch ein Verfahren mit den Merkmalen von Patentanspruch 1 gelöst. Erfindungsgemäß wird eine eine Strahlungsquelle und einen Strahlungsempfänger aufweisende Messeinrichtung vor dem Rahmen angeordnet und Strahlung wird von der Strahlungsquelle in Richtung zum Rahmen auf einen Reflektorträger mit mehreren Reflektoren abgestrahlt, wobei jeder Reflektor einem Rahmenteil des Rahmens zugeordnet wird, wobei die Strahlung von den Reflektoren an den Strahlungsempfänger reflektiert wird und von der Messeinrichtung Ortskoordinaten der Reflektoren an unterschiedlichen Messstellen der Rahmenteile vorzugsweise in Rahmenlängsrichtung ermittelt werden und wobei aus den so erhaltenen Messpunkten ein im wesentlichen nicht-deformierter Abschnitt der Rahmenteile ermittelt und die Abweichung der erhaltenen Messpunkte von dem nicht-deformierten Abschnitt bestimmt wird.

Bei einem Rahmenteil kann es sich vorzugsweise um einen äußeren Längsträger des Rahmens handeln. Diesem wird wenigstens ein Reflektor zugeordnet, so dass sich durch wiederholte Erfassung der Ortskoordinaten des Reflektors an unterschiedlichen Stellen des Längsträgers in Längsrichtung des Rahmens das Höhen- und/oder Seitenprofil des Längsträgers bzw. die Deformation des Trägers in Rahmenlängsrichtung abbilden lässt. Insbesondere kann aus dem Verlauf der Messpunkte bzw. der erfassten Ortskoordinaten des Reflektors in Rahmenlängsrichtung ein Geradenabschitt in einfacher Weise (graphisch) ermittelt werden, der einem nicht verformten Bereich des Rahmenteils bzw, des Rahmens entspricht. Dieser nicht-verformte Bereich bzw. der diesem Bereich zugeordnete Geradenabschnitt stellt dann die Referenzachse dar, zu der der Abstand der einzelnen Messpunkte als Maß für eine Deformation des Rahmens bestimmt wird.

Eine Software-gestützte Lösung kann beispielsweise vorsehen, dass zunächst die Messpunkte bzw. die an den unterschiedlichen Messstellen in Rahmenlängsrichtung (Z) ermittelten Ortskoordinaten (X-, Y-, Z-Koordinaten) des Reflektors in einem Diagramm eingetragen werden, das die aus der Rahmenlängsrichtung und einer horizontalen oder vertikalen Querrichtung gebildete Raumebene zeigt. Unter Berücksichtigung der Messpunkteverteilung in einer Raumebene können dann solche Messpunkte ausgewählt werden, die an einem unbeschädigten Teilstück des Rahmenteils ermittelt worden sind. Diese Messpunkte liegen auf einer gemeinsamen Geraden und legen einen Geradenabschnitt in Bezug auf dessen Anfangs- und Endpunkte fest. Die Auswahl der Messpunkte, die einem Geradenabschnitt zugeordnet werden können, kann automatisch oder durch visuelle Wahrnehmung der Messpunkteverteilung und Auswahl bestimmter Messpunkte durch eine Person und/oder unter Inaugenscheinnahme des Deformationsverlaufs am Fahrzeugrahmen erfolgen. Anschließend wird dann die Abweichung aller übrigen Messpunkte von dem Geradenabschnitt bzw. einer dadurch gelegten oder parallel zum Geradenabschnitt verlaufenden Referenzachse bestimmt. Alternativ kann auf der Grundlage von ausgewählten Messpunkten auch eine Regressionsgerade ermittelt und anschließend die Abweichung der Messpunkte von der Regressionsgeraden bestimmt werden. Zusätzlich ist es auch möglich, eine Ausgleichsgerade zu ermitteln für eine Mehrzahl von Messpunkten, die möglichst wenig von einem Geradenverlauf abweichen und damit einem unbeschädigten Teilstück des Rahmenteils zugeordnet werden können. Die zulässige Abweichung zwischen den Ortskoordinaten eines Messpunktes in X-, Y- und/oder Z-Richtung von dem bestimmten Geradenabschnitt kann vorzugsweise weniger als 5 %, insbesondere weniger als 2 %, betragen, damit ein Messpunkt dem Geradenabschnitt noch zugeordnet werden kann. Im Ergebnis ergibt sich eine mögliche Deformation des vermessenen oder geprüften Rahmenteils aus der Abweichung der Messpunkte in X-, Y- und/oder Z-Richtung von den Messpunkten, die einem unbeschädigten Teilstück des Rahmenteils zugeordnet worden sind.

Insbesondere können die jeweiligen Abstände in beiden Raumebenen bestimmt werden, so dass Deformationen in horizontaler und in vertikaler Querrichtung des Rahmenteils erkennbar sind. Es versteht sich, dass eine graphische Anzeige und eine Auswertung der Messpunkte für anschließende Instandsetzungsmaßnahmen an dem Rahmen vorgesehen sein können.

Der Reflektor ist bei dem erfindungsgemäßen Verfahren wenigstens einem Rahmenteil, insbesondere einem Rahmenlängsträger, zugeordnet. Der Reflektor ist bei der Bestimmung der Ortskoordinaten an dem Rahmenteil gehalten bzw. mit dem Rahmenteil befestigt, nämlich mit dem Reflektorträger. Hierauf wird weiter unten noch eingegangen. Durch Versetzen bzw. Verschieben des Reflektors entlang des Rahmenteils und Bestimmung der Ortskoordinaten an unterschiedlichen Messstellen in Rahmenlängsrichtung wird so der Verlauf des Rahmenteils vorzugsweise in allen drei Raumrichtungen bestimmt bzw. abgebildet. Dabei sollte der einem Rahmenteil zugeordnete Reflektor an jeder Messstelle vorzugsweise einen gleichen konstanten Abstand in horizontaler und in vertikaler Querrichtung von dem Rahmenteil aufweisen.

Das erfindungsgemäße Verfahren setzt nicht voraus, dass die geometrische Rahmenmittellinie bekannt ist oder zuvor bestimmt wird. Insbesondere muss die Messeinrichtung nicht exakt zur geometrischen Rahmenmittellinie ausgerichtet werden, um die Rahmenvermessung vorzunehmen. Die Vermessung und Prüfung des Fahrzeugrahmens ist dadurch bei geringem Zeit- und Arbeitsaufwand möglich. Bei Einhaltung eines Mindestabstandes, der durch die Messtechnik vorgegeben ist und zwischen 2 m bis 5 m betragen kann, lässt sich bei geeigneter Ausbildung der Messeinrichtung die Messeinrichtung grundsätzlich an beliebiger Stelle vor dem Rahmen oder hinter dem Rahmen positionieren, um den Rahmen zu vermessen und zu prüfen.

Vorrichtungsgemäß sind dementsprechend bei einer erfindungsgemäßen Anordnung der eingangs genannten Art ein wenigstens zwei Reflektoren aufweisender Reflektorträger, eine eine Strahlungsquelle und einen Strahlungsempfänger aufweisende Messeinrichtung und eine Rechnereinrichtung ausgebildet zur Durchführung des erfindungsgemäßen Verfahrens vorgesehen. Insbesondere kann ein Computerprogramm mit Programmcode-Mitteln zur Ausführung des erfindungsgemäßen Verfahrens vorgesehen sein.

Bei der Erfindung ist die gleichzeitige Vermessung und Prüfung von zwei gegenüberliegenden sich in Rahmenlängsrichtung erstreckenden Rahmenteilen, insbesondere von gegenüberliegenden äußeren Längsträgern des Rahmens, vorgesehen. Zu diesem Zweck weist der Reflektorträger in horizontaler Richtung einen ersten äußeren Reflektor und gegenüberliegend einen zweiten äußeren Reflektor auf, wobei die beiden äußeren Reflektoren an gegenüberliegenden Längsseiten des Rahmens vorgesehenen äußeren Rahmenteilen zugeordnet werden und wobei von der Messeinrichtung Ortskoordinaten der Reflektoren gemeinsam ermittelt werden. Dadurch ist in einfacher Weise eine Vermessung und Prüfung des gesamten Rahmens bei geringem Zeit- und Arbeitsaufwand möglich.

Die beiden äußeren Reflektoren lassen sich in horizontaler Richtung symmetrisch zu einer geometrischen Mitte zwischen den äußeren Reflektoren bzw. zur Mitte des Reflektorträgers verstellen. In diesem Zusammenhang weist der Reflektorträger zwei derart verstellbar zueinander gelagerte äußere Reflektoren auf, dass die äußeren Reflektoren unabhängig vom gegenseitigen Abstand stets einen gleichen Abstand zur geometrischen Mitte aufweisen. Sind die äußeren Reflektoren gegenüberliegenden äußeren Längsträgern des Rahmens zugeordnet bzw. mit diesen verbunden, wird der Abstand zwischen den äußeren Reflektoren entsprechend zu dem Abstand zwischen den äußeren Längsträgern des Rahmens eingestellt. Dabei kann, vorzugsweise, eine Verstellung eines ersten äußeren Reflektors in Querrichtung automatisch zu einer entsprechend großen Verstellung des gegenüberliegend angeordneten zweiten äußeren Reflektors führen, so dass sichergestellt ist, dass beide äußeren Reflektoren stets den gleichen Abstand von der geometrischen Mitte aufweisen.

Der Reflektorträger kann darüber hinaus zwei ortsfest an dem Reflektorträger angeordnete innere Reflektoren aufweisen. Der Abstand zwischen den inneren Reflektoren ist konstant. Die inneren Reflektoren weisen folglich auch einen gleichen Abstand von der geometrischen Mitte auf. Die inneren Reflektoren sind vorzugsweise zur Abstandbestimmung zwischen der Messeinrichtung und dem Reflektorträger vorgesehen, was eine entsprechende Ausbildung eines zur Bestimmung der Ortskoordinaten vorgesehenen Algorithmus voraussetzt.

Die inneren Reflektoren und die äußeren Reflektoren können auf einer gemeinsamen horizontalen Achse gelagert sein. In diesem Zusammenhang können die Reflektoren in vertikaler Richtung synchron verstellbar sein. Dadurch wird die Ermittlung der Ortskoordinaten vereinfacht. In diesem Zusammenhang kann der Reflektorträger mit den Reflektoren in vertikaler Richtung verstellbar an vertikalen Haltestangen gelagert sein, die zum Einhängen und/oder zur Befestigung des Reflektorträgers an gegenüberliegenden Längsträgern des Fahrzeugrahmen ausgebildet sein können. Der Reflektorträger lässt sich dann vorzugsweise in der Höhe bedarfsweise nach oben oder nach unten verstellen, wobei während der Ermittlung der Ortskoordinaten der Reflektoren an unterschiedlichen Messstellen in Rahmenlängsrichtung jedoch keine Höhenverstellung vorgenommen wird. Durch den in vertikaler Richtung verstellbaren Reflektorträger ist es in einfacher Weise möglich, eine Rahmenvermessung in einer solchen Höhe vorzunehmen, in der eine Störung der Messungen durch Einbau- oder Anbauteile des Rahmens weitgehend ausgeschlossen ist, beispielsweise unterhalb von einem an dem Rahmen gehaltenen Differentialgetriebe.

Bei einer bevorzugten Ausführungsform des erfindungsgemäßen Verfahrens wird aus den Messpunkten der beiden äußeren Reflektoren eine geometrische

Mittellinie des Rahmens in einer aus der Rahmenlängsrichtung Z und der horizontalen Querrichtung X gebildeten Raumebene und/oder in einer aus der Rahmenlängsrichtung Z und der vertikalen Querrichtung Y gebildeten Raumebene bestimmt. Zusätzlich kann dann der jeweilige Abstand der Messpunkte von der geometrischen Mittellinie bestimmt werden. Insbesondere wird die geometrische Mittellinie aus solchen Messpunkten bestimmt, die einem Geradenabschnitt bzw. einem nicht-deformierten Bereich des Rahmens zugeordnet werden können bzw. worden sind. Dies kann ebenfalls automatisch durch eine entsprechende Softwarelösung erfolgen.

Das erfindungsgemäße Verfahren lässt es zu, dass die Messstellen, an denen die Ortskoordinaten der Reflektoren zur Rahmenvermessung ermittelt werden, unterschiedlich weit voneinander beabstandet sind. Es können Abstände von 0,1 m bis 1,0 m, vorzugsweise von ca, 0,2 bis 0,5 m, vorgesehen sein. Im Bereich einer Verformung des Rahmens können auch mehr Messpunkte vorgesehen werden, um in diesem Bereich eine besonders exakte Bestimmung der Deformation zu ermöglichen.

Bei einem weiteren Aspekt der vorliegenden Erfindung, der auch unabhängig von den zuvor beschriebenen Merkmalen des erfindungsgemäßen Verfahrens verwirklicht sein kann, ist vorgesehen, dass der Reflektor innerhalb des von den Rahmenaußenflächen begrenzten Bereichs angeordnet wird. Sind mehrere Reflektoren auf einem Reflektorträger vorgesehen, kann der Reflektorträger im Rahmeninnenbereich positioniert bzw. in den Rahmen ein- bzw. an den Rahmen angehängt werden, vorzugsweise über äußere Längsträger des Rahmens.

Im Unterschied zu dem Stand der Technik sieht die Erfindung an dieser Stelle keine Befestigung des Reflektors von außen an dem Rahmen vor. Insbesondere soll der Reflektor bei dem erfindungsgemäßen Verfahren seitlich nicht über die Fahrzeugräder überstehen bzw. im Außenbereich des Rahmens angeordnet sein. Dadurch ist es zum Anbringen des Reflektors in der Regel nicht oder lediglich in einem geringeren Umfang erforderlich, Ein- oder Anbauteile am Rahmen zu entfernen, was zu einem geringeren Aufwand und zu einer Zeitersparnis bei der Vermessung und Prüfung des Fahrzeugrahmens führt. Der Reflektorträger kann sich vorzugsweise überall dort einhängen lassen, wo ein ausreichender Freiraum im bzw. am Rahmen vorhanden ist. Gegenüber dem Stand der Technik sind somit mehr Stellen an dem Rahmen verfügbar, an denen der Reflektorträger für einen Rahmenvermessung positioniert werden kann. Im übrigen werden durch die innenliegenden, das heißt innerhalb der Räder des Fahrzeuges angeordneten Reflektoren, Messfehler bei bestimmten Deformationen des Fahrzeugrahmens ausgeschlossen bzw. verringert und somit eine hohe Messgenauigkeit bei der Ermittlung der Rahmengeometrie gewährleistet.

Im Einzelnen gibt es Vielzahl von Möglichkeiten, das erfindungsgemäße Verfahren und die erfindungsgemäße Anordnung auszugestalten und weiterzubilden, wobei einerseits auf die abhängigen Patentansprüche und andererseits auf die nachfolgende detaillierte Beschreibung eines bevorzugten Ausführungsbeispiels der Erfindung unter Bezugnahme auf die Zeichnung verwiesen wird. In der Zeichnung zeigen

Fig. 1        einen Reflektorträger zur Verwendung bei einem verwendungsgemäßen Verfahren zur Vermessung und Prüfung eines Fahrzeugrahmens in einer Ansicht schräg von vom,

Fig. 2        den in Fig. 1 dargestellten Reflektorträger von hinten (nach Entfernung eines Abdeckblechs),

Fig. 3        den in Fig. 1 dargestellten Reflektorträger in einer schematischen Ansicht im Zustand der Einhängung an einen Fahrzeugrahmen,

Fig. 4      eine perspektivische Darstellung eines in den Rahmen eines Lastkraftwagen eingehängten Reflektorträgers der in den Fig. 1 bis 3 dargestellten Art,

Fig. 5 - 9      Messwertdarstellungen von Ortskoordinaten von Reflektoren des in den Fig. 1 bis 4 dargestellten Reflektorträgers bei der Vermessung und Prüfung eines Fahrzeugrahmens eines Lastkraftwagens,

Fig. 10, 11      eine schematische Darstellung der Projektion der Reflektoren auf die Bildebene einer Kamera einer Messeinrichtung, die bei der erfindungsgemäßen Vermessung und Prüfung des Fahrzeugrahmens eingesetzt werden kann, und

Fig. 12      eine bei der erfindungsgemäßen Vermessung und Prüfung des Fahrzeugrahmens erstellte Bildaufnahme des Reflektorträgers.

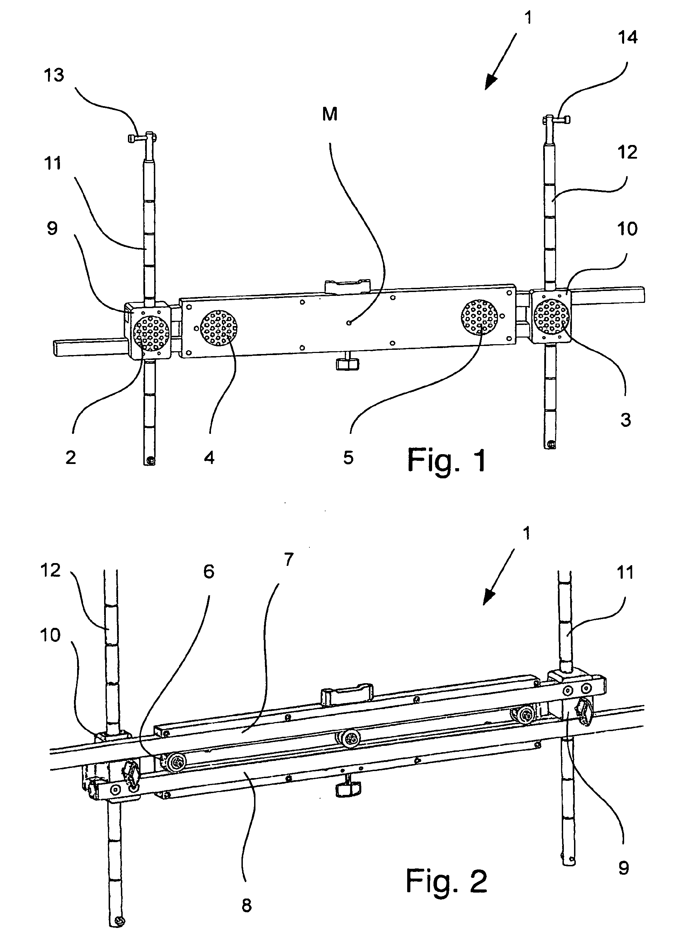

In Fig. 1 ist ein Reflektorträger 1 mit zwei äußeren Reflektoren 2, 3 und zwei inneren Reflektoren 4, 5 dargestellt. Wie sich aus Fig. 2 ergibt, dass den in Fig. 1 dargestellten Reflektorträger 1 von hinten nach dem Entfernen eines Abdeckblechs zeigt, weist der Reflektorträger 1 einen Riemen 6 auf, über den zwei horizontale Stangen 7, 8 miteinander gekoppelt sind. Die obere vertikale Stange 7 ist mit einem Kastenprofil 9 fest verbunden, während die untere horizontale Stange 8 mit einem Kastenprofil 10 fest verbunden ist. Die beiden Kastenprofile 9, 10 sind an senkrechten Stangen 11, 12 höhenverstellbar geführt, wobei die obere horizontale Stange 7 an dem Kastenprofil 10 und die untere horizontale Stange 8 an dem Kastenprofil 9 geführt ist. Wenn das Kastenprofil 10 nach außen gezogen wird mit der senkrechten Stange 12, wird automatisch mittels des Riemens 6 auch das Kastenprofil 9 mit der rechten senkrechten Stange 11 durch die Umlenkung des Riemens 6 zur anderen Seite geschoben. Das gleiche Prinzip lässt sich durch über einen Ritzel gekoppelte Zahnstangen, die mit den senkrechten Stangen 11, 12 verbunden sind, verwirklichen. Die konstruktive Ausgestaltung des Reflektorträgers 1 lässt es zu, dass die beiden äußeren Reflektoren 2, 3 in vertikaler Richtung einzeln einstellbar und in horizontaler Richtung symmetrisch zu einer geometrischen Mitte M zwischen den Reflektoren 2, 3 verstellbar sind.

Die beiden inneren Reflektoren 4, 5 sind mit einem festen Abstand zueinander angeordnet, wobei die inneren Reflektoren 4, 5 stets den gleichen Abstand zur geometrischen Mitte M zwischen den äußeren Reflektoren 2, 3 aufweisen.

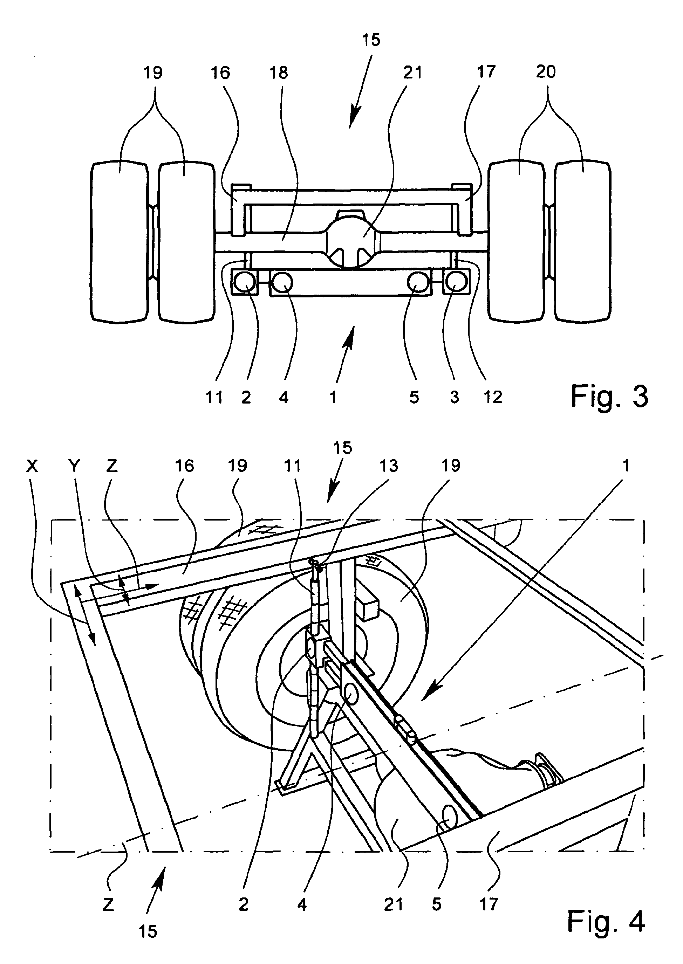

An den senkrechten Stangen 11, 12 des Reflektorträgers 1 sind Mittel 13, 14 zum Einhängen des Reflektorträgers 1 in einen Rahmen 15 vorgesehen, wobei die senkrechten Stangen 11, 12 vorzugsweise an Rahmenlängsträgern 16, 17 gehalten sind. Dies ist schematisch in Fig. 3 und perspektivisch in Fig. 4 dargestellt. Alternativ kann eine Klemmeinrichtung vorgesehen sein, um den Reflektorträger 1 an dem Rahmen 15 zu befestigen, wobei die Klemmeinrichtung den Rahmen 15 umfassen kann und sich bedarfsweise weiten lässt.

Der Rahmen 15 steht über auf einer Radachse 18 gelagerte Räder 19, 20 auf dem Boden auf. Wie sich insbesondere aus Fig. 3 ergibt, ist der Reflektorträger 1 im Wesentlichen innerhalb eines von den Rahmenlängsträgern 16, 17 begrenzten Rahmeninnenraums angeordnet. Insbesondere stehen die äußeren Reflektoren 2, 3 nicht über die Räder 19, 20 nach außen über bzw. sind außerhalb von den Rädern 19, 20 angeordnet, was sich ebenfalls aus Fig. 3 ergibt. Vorzugsweise ist der Reflektorträger 1 unterhalb von einem Differentialgetriebe 21 angeordnet.

Durch die Anordnung aller Reflektoren 2, 3, 4, 5 innerhalb des Rahmens 15 lässt sich eine Vermessung und Prüfung der Rahmengeometrie bei geringem Arbeits- und Zeitaufwand durchführen, wobei der Reflektorträger 1 bedarfsweise an jeder Stelle des Rahmens 15 angeordnet werden kann, an der das Einhängen an den Rahmenlängsträgern 16, 17 möglich ist. Im Übrigen werden Messfehler bei der Rahmenvermessung durch die vergleichsweise geringe Länge des Reflektorträgers 1 bzw. den vergleichsweise geringen Abstand zwischen den äußeren Reflektoren 2, 3 verringert.

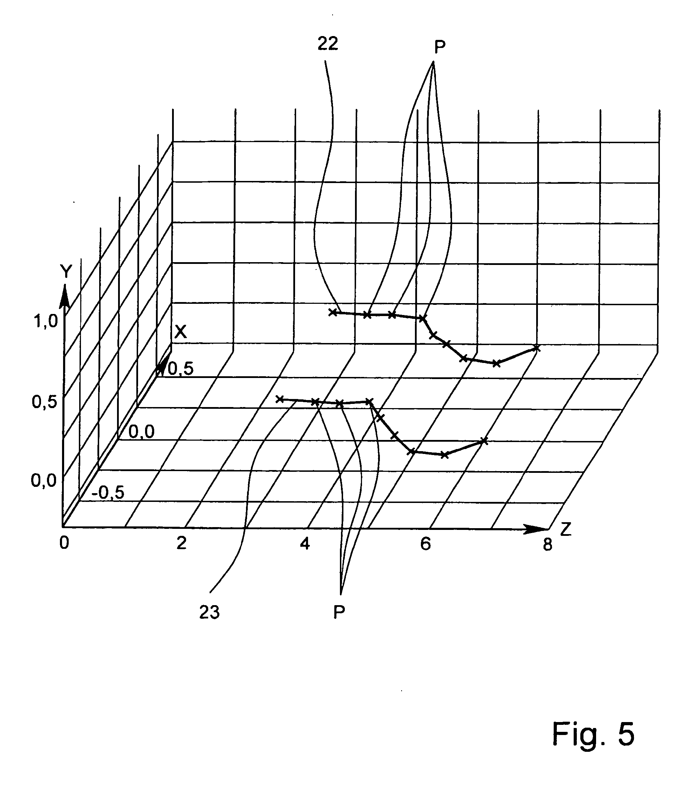

Anhand der Fig. 5 bis 9 wird nachfolgend beispielhaft ein Verfahren zur Vermessung und Prüfung des Rahmens 15 erläutert. Zunächst wird der Reflektorträger 1 wie beschrieben an den Rahmenlängsträgern 16, 17 an unterschiedlichen Messpunkten in Rahmenlängsrichtung Z eingehängt. Der Reflektorträger 1 kann unter den Rahmen 15 eingehängt werden und hat keine weit nach außen reichenden Trägerteile. Dadurch ist es nicht notwendig, für die Vermessung und Prüfung des Rahmens 15 Anbauteile am Rahmen 15 zu entfernen. Der Reflektorträger 1 kann dort eingehängt werden, wo sich ein entsprechender Freiraum befindet. Dort, wo der Rahmen 15 beschädigt ist, können kürzere Messabstände an dem Rahmen 15 gewählt werden als bei einem unbeschädigten Teilstück des Rahmens 15.

Vor dem Reflektorträger 1 bzw. dem Rahmen 15 wird eine eine Strahlungsquelle (Laser) und einen Strahlungsempfänger (Kamera) aufweisende Messeinrichtung angeordnet und Strahlung von der Strahlungsquelle in Richtung zum Rahmen 15 auf den Reflektorträger 1 abgestrahlt. Vorzugsweise reicht es aus, den Strahlungsempfänger lediglich grob zum Reflektorträger 1 auszurichten. Insbesondere ist es nicht vorgesehen, die Kamera exakt zur geometrischen Mittellängsachse des Rahmens 15 auszurichten. Dabei ist der äußere Reflektor 2 dem Rahmenlängsträger 16 und der äußere Reflektor 3 dem Rahmenlängsträger 17 zugeordnet. Durch die Aufhängung des Reflektorträgers 1 über die senkrechten Stangen 11, 12 an den Rahmenlängsträgern 16, 17 ist sichergestellt, dass sich die äußeren Reflektoren 2, 3 in einer bestimmten Stellung unterhalb von den Rahmenlängsträgern 16, 17 befinden. Durch Auseinanderziehen oder Zusammenschieben der senkrechten Stangen 11, 12 ist der Abstand zwischen den äußeren Reflektoren 2, 3 auf die tatsächliche Breite des Rahmens 15 bzw. auf den Abstand zwischen den Rahmenlängsträgern 16, 17 einstellbar. Im Ergebnis folgt jeder Reflektor 2, 3 dem Verlauf des zugeordneten Rahmenlängsträges 16, 17 bei Vermessung des Rahmens 15 in Rahmenlängsrichtung Z.

Eine Messeinrichtung zur Vermessung und Prüfung des Rahmens 15 kann als Strahlungsquelle mehrere Infrarot-LEDs aufweisen, die beispielsweise Licht mit einer Wellenlänge von 850 nm in einem Winkel von $\pm$ 15° ausstrahlen. Eine digitale Kamera ist vorgesehen, um das an den Reflektoren 2, 3, 4, 5 reflektierte Licht zu erfassen. Die Kamera kann aus einem Objektiv und einem digitalen Kamerachip bestehen. Das Objektiv erzeugt durch optische Abbildung ein Abbild aller reflektierten Objekte auf dem Kamerachip. Der erfasste Bereich kann beispielsweise bei $\pm$ 7,5° liegen. Darüber hinaus ist eine Elektronik vorgesehen, die von einem Mikroprozessorsystem mit Speicher gebildet wird, wobei die digitalen Bilder des Kamerachips in das Mikroprozessorsystem eingelesen werden können.

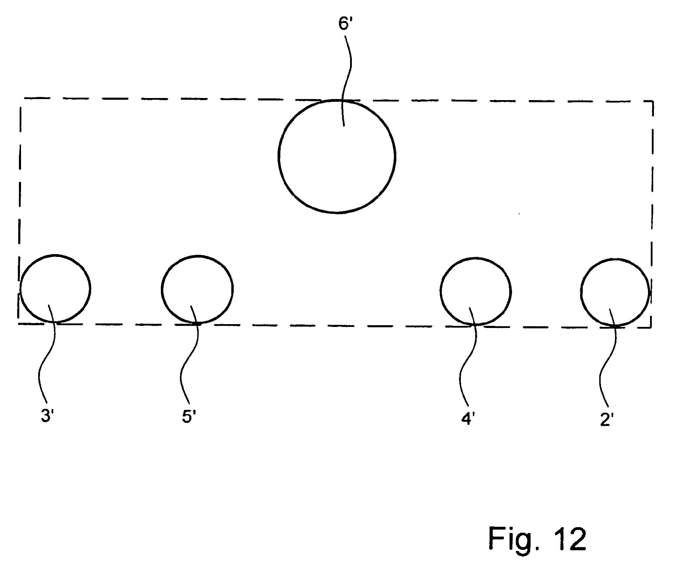

Die Elektronik nimmt mit der Kamera zwei Bilder auf und steuert die Infrarotbeleuchtung in der Weise an, dass das erste Bild ohne Beleuchtung und das zweite Bild mit Beleuchtung aufgenommen wird. Das ausgesendete Licht wird von den Reflektoren 2, 3, 4, 5 zurückgeworfen, so dass diese in dem zweiten Bild als helle kreisförmige Bereiche 2', 3', 4', 5' erscheinen. Eine Bildaufnahme bei Beleuchtung des Reflektorträgers 1 ist in Fig. 12 gezeigt. Es wird anschließend die Differenz der beiden Bilder gebildet, so dass nur die angeleuchteten Reflektoren 2, 3, 4, 5 sichtbar sind. Gleichlicht, wie es von der Sonne kommt, wird durch dieses Verfahren ausgefiltert. Zusätzlich kann vor der Kamera ein Tageslichtsperrfilter angebracht sein, der Licht mit einer Wellenlänge im sichtbaren Bereich, wie es beispielsweise von einer Leuchtstoffröhre ausgesendet werden kann, auf optischem Weg ausfiltert.

Die Elektronik ermittelt dann automatisch die Position der hellen Bereiche 2', 3', 4', 5' im Bild. Hierzu werden zunächst alle weißen Bereiche 2', 3', 4', 5', 6' bestimmt. Als "weiß" wird ein Bildpunkt dann angesehen, wenn er einen bestimmten Schwellenwert überschreitet, ansonsten wird er als "schwarz" angesehen. Sind mehr als vier weiße Bereiche 2', 3', 4', 5', 6' in der Bildaufnahme enthalten, so ist zu ermitteln, welche Bereiche 2', 3', 4', 5' plausibel sind, d. h. auf die Reflexion der Strahlung an den Reflektoren 2, 3, 4, 5 zurückgehen und welcher weitere Bereich 6' nicht plausibel ist, d. h. auf die Reflexion an einem anderen Rahmenteil oder einem sonstigen Objekt im Bereich des Rahmens 15 zurückzuführen ist.

Die von der Strahlungsquelle ausgehende Strahlung wird von den Reflektoren 2, 3, 4, 5 auf den Strahlungsempfänger zurückgeworfen, wobei mittels eines geeigneten Algorithmus Ortskoordinaten der Reflektoren 2, 3, 4, 5 an unterschiedlichen Messstellen in Rahmenlängsrichtung Z ermittelt werden. Der Abstand zwischen dem Reflektorträger 1 und der Messeinrichtung in Rahmenlängsrichtung Z wird vorzugsweise aus der von den inneren Reflektoren 4, 5 an den Strahlungsempfänger reflektierten Strahlung bestimmt. Die von den äußeren Reflektoren 2, 3 an den Strahlungsempfänger reflektierte Strahlung dient vorzugsweise zur Ermittlung der Ortskoordinaten der Reflektoren 2, 3 in X- und in Y-Querrichtung.

Das Ergebnis der Vermessung des Rahmens 15, das heißt die Ortskoordinaten (X-, Y- und Z-Koordinaten) der äußeren Reflektoren 2, 3, sind in Fig. 5 in einem Diagramm als Messpunkte P eingetragen worden, wobei die obere Linie 22 durch Verbinden der durch die Ortskoordinaten des äußeren Reflektors 2 festgelegten Messpunkte P in Rahmenlängsrichtung Z und die untere Linie durch Verbinden der durch die Ortskoordinaten des äußeren Reflektors 3 festgelegten Messpunkte P in Rahmenlängsrichtung Z erhalten wird.

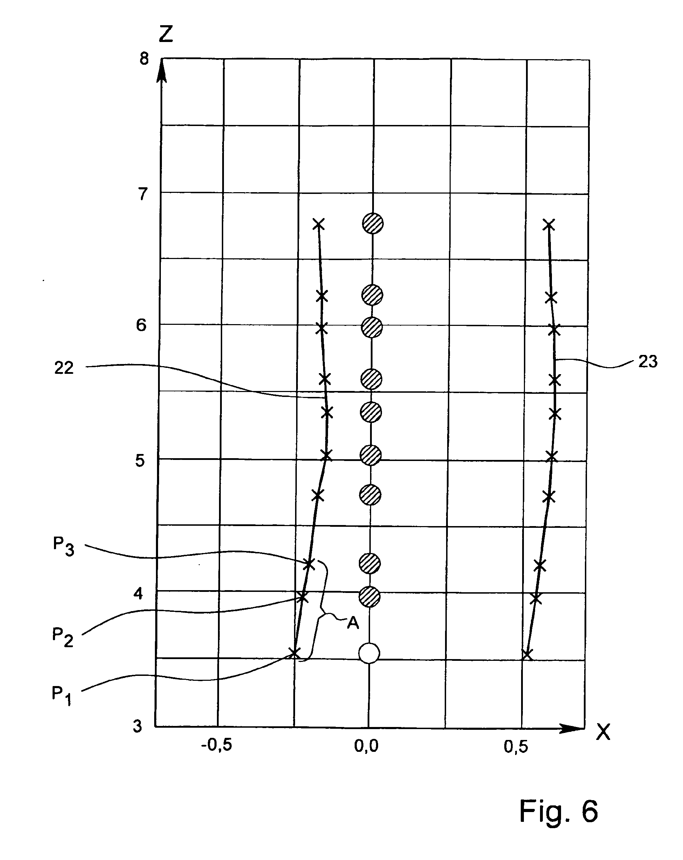

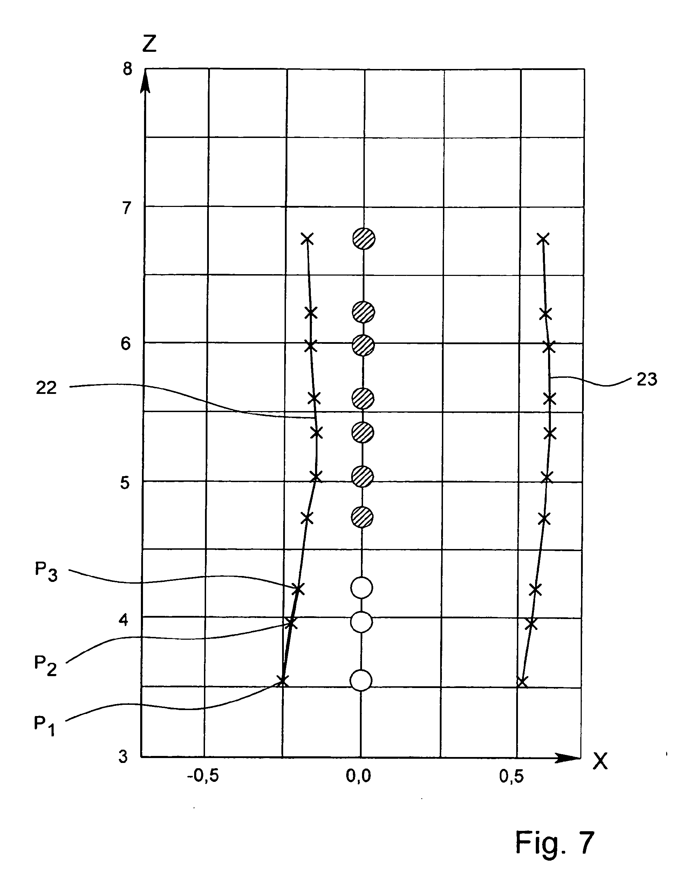

Wie sich aus den Fig. 6 und 7 ergibt, wird nachfolgend in einer aus der Rahmenlängsrichtung Z und der horizontalen Querrichtung X gebildeten Raumebene durch Auswahl von Messpunkten P ein Geradenabschnitt 24 ermittelt.

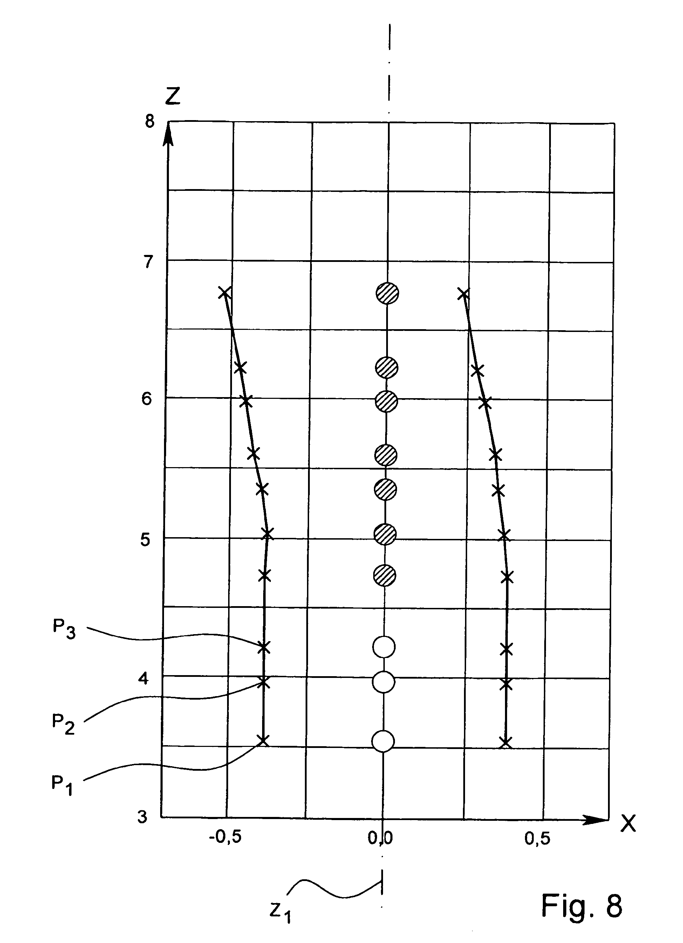

Der Geradenabschnitt 24 wird durch wenigstens zwei Messpunkte P gelegt, die an einem nicht deformierten (unbeschädigten) Teilstück A des Rahmens 15 erfasst worden sind. Gemäß den Fig. 6 und 7 sind dies die ersten drei Messpunkte $P_1$ bis $P_3$, die auf einer gemeinsamen Geraden liegen. Der Geradenabschnitt 24, der durch den ersten Messpunkte $P_1$ und den dritten Messpunkt $P_3$ begrenzt ist, dient zur Ausrichtung aller Messpunkte P, was sich durch einen Vergleich der Fig. 7 und 8 ergibt.

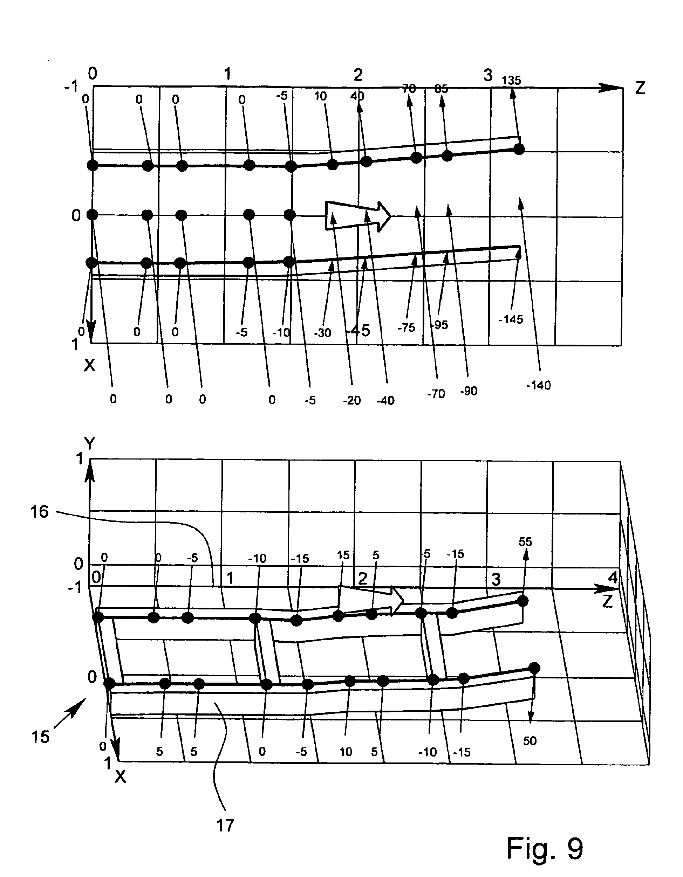

Gemäß Fig. 8 wird aus den zur Ermittlung des Geradenabschnitts 24 festgelegten Messpunktepaaren $P_1$ bis $P_3$ der beiden äußeren Reflektoren 2, 3 die geometrische Rahmenmittellinie $Z_1$ in der X-Z-Raumebene und die jeweilige Abweichung der Messpunkte P in horizontaler Richtung X von der geometrischen Rahmenmittellinie $Z_1$ bestimmt, was in Fig. 9 dargestellt ist. Nicht dargestellt ist, dass vorzugsweise auch eine geometrische Rahmenmittellinie in der Y-Z-Ebene ermittelt und die jeweilige Abweichung der Messpunkte P in vertikaler Richtung Y von der geometrischen Rahmenmittellinie in der Y-Z-Ebene bestimmt werden.

Im Ergebnis ermöglicht es das beschriebene Verfahren, die Messeinrichtung mit der Strahlungsquelle und dem Strahlungsempfänger für eine Vermessung des Rahmens 15 bei Einhaltung eines Mindestabstandes von dem Reflektorträger 1 beliebig zur tatsächlichen geometrischen Rahmenmittellinie $Z_1$ des Rahmens 15 anzuordnen, wobei die Rahmenmittellinie $Z_1$ aus dem Verlauf der Messpunkte in X-Z-Richtung abgeleitet wird. Ebenso kann eine Rahmenmittellinie in der Y-Z-Ebene aus dem Verlauf der Messpunkte in Y-Z-Richtung abgeleitet werden. Dadurch werden eine wenig arbeits- und zeitaufwändige Vermessung und Prüfung des Rahmens 15 bei hoher Genauigkeit der Rahmenvermessung ermöglicht.

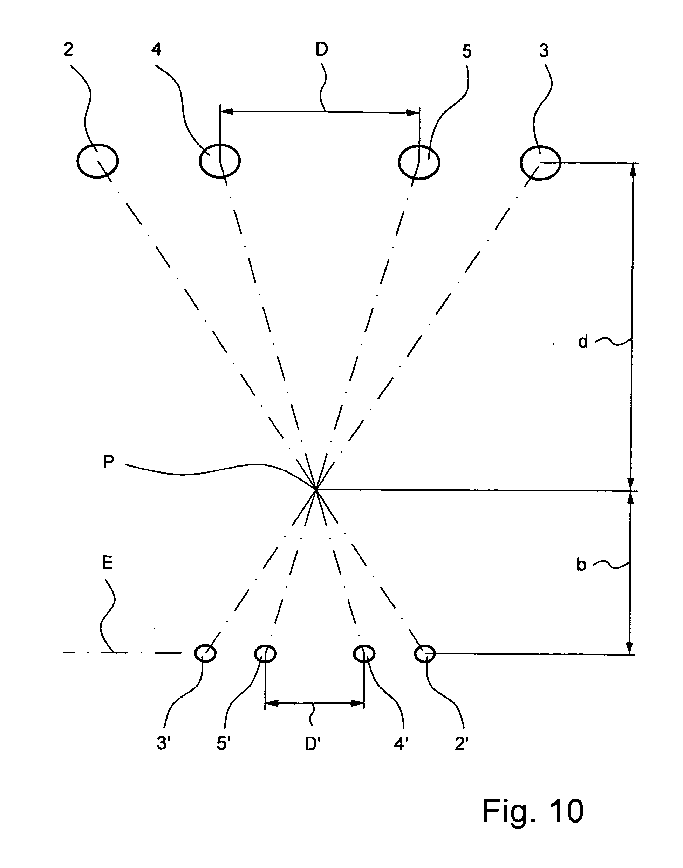

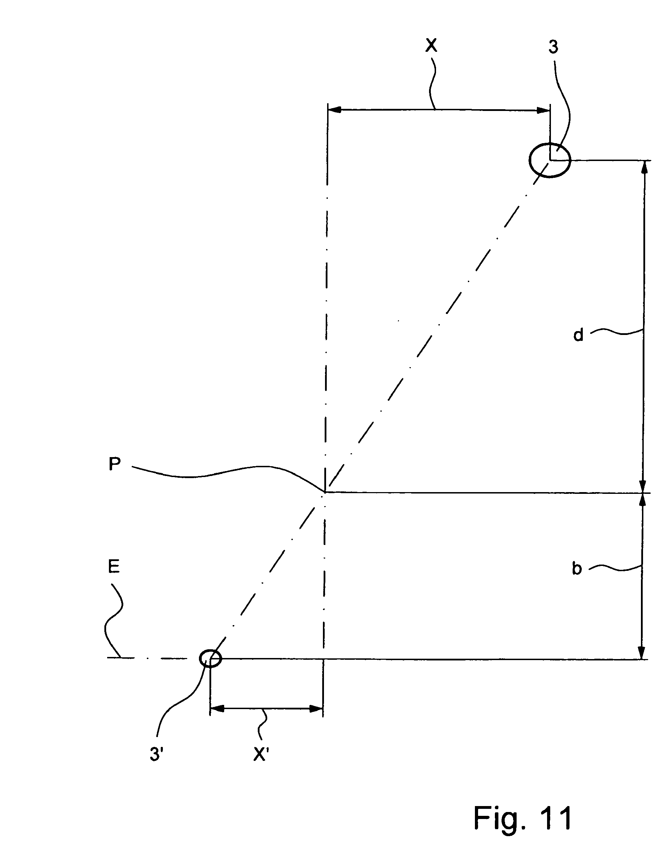

Anhand der Fig. 10 bis 12 wird nachfolgend die Bestimmung der Koordinaten der Reflektoren 2, 3, 4, 5 und das Ausblenden unplausibler Bereiche 6' in einer mit der Kamera der Messeinrichtung erhaltenen Bildaufnahme des Reflektorträgers 1 im Einzelnen erläutert. Die Fig. 10 und 11 zeigen schematisch die Projektion der Reflektoren 2, 3, 4, 5 auf die Bildebene E der Kamera. Die Kamera weist dabei das Projektionszentrum P auf. Die Anwendung des Vierstrecken-Satzes führt zur Gleichheit folgender Verhältnisse gemäß der allgemeinen Beziehung (I):

$$\frac{d}{D} = \frac{b}{D'} \qquad\qquad (I)$$

mit:

dAbstand Reflektorträgers 1 - Kamera (Projektionszentrum P)
bBildweite der Kamera (bekannt)
DAbstand der inneren Reflektoren 4, 5 (bekannt)
D'Abstand der weißen Bereiche 4', 5' in der Bildaufnahme (automatisch ermittelt)

Der gesuchte Abstand d des Reflektorträgers 1 von der Kamera ergibt sich aus Gleichung (II):

$$d = b \cdot \frac{D}{D'} \qquad\qquad (II)$$

Gemäß Fig. 11 führt der Vierstreckensatz zudem zur Gleichheit folgender Verhältnisse gemäß Gleichung (III):

$$\frac{X}{d} = \frac{X'}{b} \qquad\qquad (III)$$

mit:

dAbstand Reflektorträger 1 - Kamera (Projektionszentrum P)
bBildweite der Kamera (bekannt)
XX-Koordinate beispielsweise des äußeren Reflektors 3 (Abstand zur Messachse)
X'X-Koordinate des äußeren weißen Bereiches 3' in der Bildaufnahme (Abstand zur Bildmitte)

Daraus ergibt sich die X-Koordinate beispielsweise für den äußeren Reflektor 3 aus Gleichung (IV):

$$X = X' \cdot \frac{d}{b} \qquad\qquad (IV)$$

Die Y-Koordinate beispielsweise des äußeren Reflektors 3 ergibt sich in analoger Weise aus nachfolgender Gleichung (V):

$$Y = Y' \cdot \frac{D}{D'} \qquad\qquad (V)$$

mit:

YY-Koordinate beispielsweise des äußeren Reflektors 3 (Abstand zur Messachse)
Y'Y-Koordinate des äußeren weißen Bereiches 3' in der Bildaufnahme (Abstand zur Bildmitte)

Anhand von Fig. 12 werden nachfolgend Möglichkeiten beschrieben, um einen unplausiblen Bereich 6' in einer Bildaufnahme "auszublenden", d. h. bei der Bestimmung der Ortskoordinaten der Reflektoren 2, 3, 4, 5 unberücksichtigt zu lassen. Fig. 12 zeigt schematisch eine Bildaufnahme des Reflektorträgers 1, wobei die von den Reflektoren 2, 3, 4, 5 reflektierte Strahlung als kreisförmige weiße Bereiche 2', 3', 4', 5' in der Bildaufnahme erscheint. Darüber hinaus ist ein weiterer kreisförmiger Bereich 6' im Bild enthalten, der im Sinne der Erfindung "unplausibel" ist und nicht auf die an einem der Reflektoren 2, 3, 4, 5 reflektierte Strahlung, sondern auf die Reflexion an einem weiteren nicht zum Messsystem gehörenden Objekt im Bereich des Rahmens 15 zurückzuführen ist. Beispielsweise kann ein unplausibler Bereich 6' durch die Reflexion von Strahlung an blanken Metallteilen des Rahmens 15 verursacht sein.

Das Ausblenden eines unplausiblen Bereichs 6' kann vorzugsweise auf der Grundlage der geometrischen Daten der weiteren plausiblen Bereiche 2', 3', 4', 5' in der Bildaufnahme erfolgen. Die Reflektoren 2, 3, 4, 5 auf dem Reflektorträger 1 sind gleich groß, kreisförmig und liegen auf einer Linie. Dementsprechend liegen auch die weißen Bereich 2', 3', 4', 5' in der Bildaufnahme, die auf Strahlungsreflexion an den Reflektoren 2, 3, 4, 5 zurückzuführen sind, auf einer Linie. "Plausible" weiße Bereiche 2', 3', 4', 5' im Bild können dabei solche sein, die kreisförmig sind, zu denen drei weitere, ähnlich große Bereiche 2', 3', 4', 5' existieren und die mit drei weiteren Bereichen 2', 3', 4', 5' auf einer Linie liegen.

Plausible Bereiche 2', 3', 4', 5' sind im Wesentlichen kreisförmig und haben ein Verhältnis von Höhe zu Breite von ca. 1. Ist das Verhältnis kleiner als beispielsweise 0,75 oder größer als beispielsweise 1,35, kann ein solcher unplausibler Bereich 6' ausgeblendet werden.

Bei einem plausiblen kreisförmigen Bereich 2', 3', 4', 5' beträgt das Verhältnis von Fläche zu dem Produkt aus Breite und Höhe eines plausiblen Bereiches 2', 3', 4', 5' ca. 0,79. Ist das Verhältnis kleiner als beispielsweise 0,6, kann ein solcher unplausibler Bereich 6' ausgeblendet werden. Hierdurch lassen sich Formabweichungen der plausiblen Bereiche 2', 3', 4', 5' von der idealen Kreisform, insbesondere in Abhängigkeit vom Abstand zum Reflektorträgers 1, berücksichtigen.

Alternativ oder ergänzend kann zum Ausblenden eines unplausiblen Bereichs 6' vorgesehen sein, für jeden Bereich 2', 3', 4', 5', 6' die Anzahl der ähnlich großen Bereiche zu bestimmen, deren Größe beispielsweise zwischen 50 % und 150 % des betrachteten Bereiches 2', 3', 4', 5', 6' liegt. Ist diese Anzahl der ähnlich großen Bereiche kleiner als 3, so ist ein solcher Bereich 6' unplausibel im Sinne der Erfindung und wird bei der Ermittlung der Ortskoordinaten der Reflektorträger 2, 3, 4, 5 nicht berücksichtigt.

Um einen unplausiblen Bereich 6' zu ermitteln, kann auch vorgesehen sein, die (vier) weißen Bereiche 2', 3', 4', 5' zu bestimmen, die auf einer Geraden liegen oder am nächsten zu einer Geraden angeordnet sind. Die in Fig. 12 dargestellten fünf weißen Bereiche 2', 3', 4', 5', 6' sollen beispielhaft folgende Koordinaten aufweisen:

| Bereich | x | y |
|---|---|---|
| 2' | 2 | 0 |
| 3' | -2 | 0 |
| 4' | 1 | 0 |
| 5' | -1 | 0 |
| 6' | 0 | 1 |

Von jedem weißen Bereich 2', 3', 4', 5', 6' ausgehend werden zu jedem anderen weißen Bereich 2', 3', 4', 5', 6' zwei verschiedene Vektoren gebildet.

Für den weißen Bereich 2' werden folgende Vektoren gebildet:

2'→3' (d. h. von Bereich 2' zu Bereich 3')

2'→4'

2'→5'

2'→6'

Von diesen Vektoren werden alle möglichen Kombinationen gebildet, ohne dass eine Kombination in umgekehrter Reihenfolge vorkommt. Für den weißen Bereich 2' beispielsweise werden folgende sechs Kombinationen gebildet:

2'→3' und 2'→4'

2'→3' und 2'→5'

2'→3' und 2'→6'

2'→4' und 2'→5'

2'→4' und 2'→6'

2'→5' und 2'→6'

Mit der allgemeinen Darstellung $(x_1|y_1)$ und $(x_2|y_2)$ für zwei Vektoren$_{1, 2}$ wird zu jeder Kombination der Betrag s nach Gleichung (VI) berechnet:

$$s = \left| \frac{x_1 \bullet x_2 + y_1 \bullet y_2}{\sqrt{(x_1^2 + y_1^2) \bullet (x_2^2 + y_2^2)}} \right| \qquad \text{(VI)}$$

Dabei handelt es sich um den Betrag s des Kosinus, der über das Skalarprodukt gebildet wurde. Es wird somit der spitze Winkel zwischen den Vektoren betrachtet. Je näher der berechnete Wert bei 1 liegt, desto kleiner ist der Winkel zwischen den Vektoren. Die berechneten Werte werden für alle weißen Bereiche 2', 3', 4', 5', 6' in eine Tabelle abgelegt. Für den Bereich 2' ergibt sich beispielsweise:

Bereich 2'

|        | 2'→2' | 2'→3' | 2'→4' | 2'→5' | 2'→6' |
|--------|-------|-------|-------|-------|-------|
| 2'→2'  | -     | -     | -     | -     | -     |
| 2'→3'  | -     | -     | 1     | 1     | 0,89  |
| 2'→4'  | -     | -     | -     | -     | 0,89  |
| 2'→5'  | -     | -     | 1     | -     | 0,89  |
| 2'→6'  | -     | -     | -     | -     | -     |

Nicht gebildete Vektoren und nicht betrachtete Kombinationen sind mit einem waagerechten Strich gekennzeichnet. Beispielsweise kann ein Vektor 2'→2' nicht gebildet werden, weil es sich beim Start- und Zielpunkt um ein und denselben weißen Bereich 2' handelt. Zwei identische Vektoren dürfen nicht mit einbezogen werden: Deshalb wird z. B, die Kombination 2'→3' und 2'→3' nicht betrachtet. Ist z. B. der Eintrag 2'→3' und 2'→4' bereits vorhanden, so darf die Kombination 2'→4' und 2'→3' nicht mehr eingetragen werden.

In den entsprechenden Tabellen für alle Bereiche 2', 3', 4', 5', 6' werden die drei größten Einträge ermittelt und die weißen Bereiche 2', 3', 4', 5', 6' nach der Summe dieser drei größten Einträge sortiert:

| Bereich | größter Eintrag | 2. größter Eintrag | 3. größter Eintrag | Summe |
|---------|-----------------|--------------------|--------------------|-------|
| 2'      | 1               | 1                  | 1                  | 3,0   |
| 3'      | 1               | 1                  | 1                  | 3,0   |
| 4'      | 1               | 1                  | 1                  | 3,0   |
| 5'      | 1               | 1                  | 1                  | 3,0   |
| 6'      | 0,95            | 0,95               | 0,60               | 2,5   |

Die obersten vier weißen Bereiche 2', 3', 4', 5' sind diejenigen, die auf einer Geraden liegen bzw. den geringsten Abstand zu einer Geraden haben. Der weiße Bereich 6' ist "unplausibel" im Sinne der Erfindung und wird bei der Ermittlung der Ortskoordinaten der Reflektorträger 2, 3, 4, 5 nicht berücksichtigt.

Um die Sicherheit noch weiter zu erhöhen, können vorzugsweise Vektoren lediglich zwischen Bereichen 2', 3', 4', 5' (mit einer Toleranz von ± 5 %) gebildet werden, die eine ähnliche Größe aufweisen. Da die Reflektoren 2, 3, 4, 5 auf dem Reflektorträger 1 annähernd waagerecht angeordnet sind, können vorzugsweise lediglich Vektoren betrachtet werden, die einen Winkel kleiner als 18° mit der Horizontalen bilden. Diese Maßnahmen verringern den Rechenaufwand bei der Ermittlung plausibler Bereiche 2', 3', 4', 5' und unplausibler Bereiche 6', da die Anzahl zu betrachtender Kombinationen sinkt.

**Patentansprüche**

1. Verfahren zur Vermessung und Prüfung eines Fahrzeugrahmens (15), insbesondere eines LKW- oder Busrahmens, wobei eine eine Strahlungsquelle und einen Strahlungsempfänger aufweisende Messeinrichtung vor dem Rahmen (15) angeordnet und Strahlung von der Strahlungsquelle in Richtung zum Rahmen (15) auf einen Reflektorträger (1) mit wenigstens einem Reflektor (2, 3, 4, 5) abgestrahlt wird, wobei der Reflektor (2, 3, 4, 5) einem Rahmenteil des Rahmens (15) zugeordnet wird und der zugeordnete Reflektor (2, 3, 4, 5) an dem Rahmenteil gehalten ist, wobei die Strahlung von dem Reflektor (2, 3, 4, 5) an den Strahlungsempfänger reflektiert wird und von der Messeinrichtung Ortskoordinaten des Reflektors (2, 3, 4, 5) an unterschiedlichen Messstellen des Rahmenteils ermittelt werden und wobei aus den so erhaltenen Messpunkten (P) ein im wesentlichen nicht-deformierter Abschnitt (A) des Rahmenteils ermittelt und die Abweichung der Messpunkte (P) von dem nicht-deformierten Abschnitt (A) bestimmt wird, **dadurch gekennzeichnet, dass** der Reflektorträgers (1) in horizontaler Querrichtung einen ersten äußeren Reflektor (2) und gegenüberliegend einen zweiten äußeren Reflektor (3) aufweist, wobei der Abstand zwischen den äußeren Reflektoren (2,3) derart verstellbar ist, dass die Reflektoren (2, 3) einen stets gleichen Abstand zur geometrischen Mitte des Reflektorträgers (1) aufweisen, wobei die beiden äußeren Reflektoren (2, 3) auf gegenüberliegenden Längsseiten des Rahmens (15) vorgesehenen äußeren Rahmenteilen zugeordnet werden und wobei von der Messeinrichtung Ortskoordinaten der Reflektoren (2, 3, 4, 5) gemeinsam ermittelt werden.

2. Verfahren nach Anspruch 1, **dadurch gekennzeichnet, dass** aus gemeinsam ermittelten Messpunkten ($P_1$, $P_2$, $P_3$) der beiden äußeren Reflektoren (2, 3) eine geometrische Mittellinie ($Z_1$) des Rahmens (15) bestimmt wird.

3. Verfahren nach einem der vorhergehenden Ansprüche 1 oder 2, **dadurch gekennzeichnet, dass** die Ortskoordinaten der Reflektoren (2, 3) in unterschiedlichen Abständen in Rahmenlängsrichtung (Z) ermittelt werden.

4. Verfahren nach einem der vorhergehenden Ansprüche, **dadurch gekennzeichnet, dass** der Reflektor (2, 3, 4, 5) innerhalb des von den Rahmenaußenflächen begrenzten Bereichs angeordnet wird.

5. Anordnung zur Vermessung und Prüfung eines Fahrzeugrahmens, insbesondere eines LKW- oder Busrahmens, mit einem wenigstens einen Reflektor (2, 3, 4, 5) aufweisenden Reflektorträger (1), mit einer eine Strahlungsquelle und einen Strahlungsempfänger aufweisenden Messeinrichtung und mit einer Rechnereinrichtung, ausgebildet zur Durchführung eines Verfahrens nach einem der vorhergehenden Ansprüche, wobei der Reflektorträger (1) zwei äußere Reflektoren (2, 3) aufweist und wobei der Abstand zwischen den äußeren Reflektoren (2, 3) derart verstellbar ist, dass die Reflektoren (2, 3) einen stets gleichen Abstand zur geometrischen Mitte des Reflektorträgers (1) aufweisen.

6. Anordnung nach Anspruch 5, **dadurch gekennzeichnet, dass** der Reflektorträger (1) zwei innere in einem festen Abstand zueinander angeordnete ortsfeste Reflektoren (4, 5) aufweist, wobei die inneren Reflektoren (4, 5) einen stets gleichen Abstand zur geometrischen Mitte des Reflektorträgers (1) aufweisen.

**Claims**

1. A method for measuring and testing a vehicle frame (15), in particular a lorry- or bus frame, wherein a measuring device having a radiation source and a radiation receiver is arranged in front of the frame (15) and radiation is beamed from the radiation source toward the frame (15) onto a reflector support (1) having at least one reflector (2, 3, 4, 5), wherein the reflector (2, 3, 4, 5) is assigned to a frame part of the frame (15) and the assigned reflector (2, 3, 4, 5) is held on the frame part, wherein the radiation is reflected by the reflector (2, 3, 4, 5) to the radiation receiver and the measuring device ascertains location coordinates of the reflector (2, 3, 4, 5) at different measuring points of the frame part, and wherein a substantially non-deformed section (A) of the frame part is ascertained from the measuring points (P) which are thus obtained, and the deviation of the measuring points (P) from the non-deformed section (A) is determined, **characterized in that** the reflector support (1), in a horizontal transverse direction, has a first outer reflector (2) and a second outer reflector (3) lying opposite, wherein the distance between the outer reflectors (2, 3) is adjustable such that the reflectors (2, 3) have a continually identical distance relative to the geometrical centre of the reflector support (1), wherein the two outer reflectors (2, 3) are assigned to outer frame parts which are provided on opposite longitudinal sides of the frame (15), and wherein location coordinates of the reflectors (2, 3, 4, 5) are determined jointly by the measurement device.

2.  The method according to claim 1, **characterized in that** a geometrical centre line ($Z_1$) of the frame (15) is determined from jointly ascertained measurement points ($P_1$, $P_2$, $P_3$) of the two outer reflectors (2, 3).

3.  The method according to one of the preceding claims 1 or 2, **characterized in that** the location coordinates of the reflectors (2, 3) are ascertained at different distances in the longitudinal direction (Z) of the frame.

4.  The method according to one of the preceding claims, **characterized in that** the reflector (2 3, 4, 5) is arranged within the region delimited by the outside surfaces of the frame.

5.  An arrangement for measuring and testing a vehicle frame, in particular a lorry- or bus frame, with a reflector support (1) having at least one reflector (2, 3, 4, 5), with a measuring device having a radiation source and a radiation receiver, and with a computer device, configured for carrying out a method according to one of the preceding claims, wherein the reflector support (1) has two outer reflectors (2, 3) and wherein the distance between the outer reflectors (2, 3) is adjustable such that the reflectors (2, 3) have a continually identical distance with respect to the geometrical centre of the reflector support (1).

6.  The arrangement according to claim 5, **characterized in that** the reflector support (1) has two inner stationary reflectors (4, 5) arranged at a fixed distance relative to one another, wherein the inner reflectors (4, 5) have a continually identical distance with respect to the geometrical centre of the reflector support (1).

**Revendications**

1.  Procédé pour la mesure et le contrôle d'un châssis de véhicule (15), en particulier d'un châssis de camion ou d'autobus, un système de mesure comportant une source de rayonnement et un récepteur de rayonnement étant disposé devant le châssis (15) et un rayonnement de la source de rayonnement étant émis en direction du châssis (15) sur un support de réflecteur (1) avec au moins un réflecteur (2, 3, 4, 5), le réflecteur (2, 3, 4, 5) attribué étant maintenu à une partie de châssis du châssis (15), le rayonnement du réflecteur (2, 3, 4, 5) étant réfléchi sur le récepteur de rayonnement et les coordonnées spatiales du réflecteur (2, 3, 4, 5) étant déterminées par le système de mesure à différents points de mesure de la partie de châssis et une section (A) de la partie de châssis pour l'essentiel non déformée étant déterminée à partir des points de mesure (P) ainsi obtenus et l'écart des points de mesure (P) étant défini par la section(A) non déformée **caractérisé en ce que** le support de réflecteur (1) comporte dans le sens transversal horizontal un premier réflecteur (2) extérieur et à l'opposé un deuxième réflecteur (3) extérieur, la distance entre les réflecteurs (2, 3) extérieurs étant réglable de telle sorte que les réflecteurs (2, 3) comportent une distance toujours égale par rapport au centre géométrique du support de réflecteur (1), les deux réflecteurs (2, 3) extérieurs étant affectés aux parties de châssis extérieures prévues sur les cotés longitudinaux opposés du châssis (15) et les coordonnées spatiales des réflecteurs(2, 3, 4, 5) étant déterminées conjointement par le système de mesure.

2.  Procédé selon la revendication 1 **caractérisé en ce qu'**une ligne médiane ($Z_1$) géométrique du châssis (15) est déterminée à partir des points de mesure ($P_1$, $P_2$, $P_3$) définis conjointement des deux réflecteurs (2, 3) extérieurs.

3.  Procédé selon une quelconque des revendications précédentes 1 ou 2 **caractérisé en ce que** les coordonnées spatiales des réflecteurs (2, 3) sont déterminées à des distances différents dans le sens longitudinal du châssis (Z).

4.  Procédé selon une quelconque des revendications précédentes **caractérisé en ce que** le réflecteur (2, 3, 4, 5) est disposé à l'intérieur de la zone délimitée par les surfaces extérieures du châssis.

5.  Agencement pour la mesure et le contrôle d'un châssis de véhicule, en particulier d'un châssis de camion ou d'autobus, avec au moins un support de réflecteur (1) comportant un réflecteur (2, 3, 4, 5), avec un système de mesure comportant une source de rayonnement et un récepteur de rayonnement et avec un dispositif à calculateur, constitué pour réaliser un procédé selon une quelconque des revendications précédentes, le support de réflecteur (1) comportant deux réflecteurs (2, 3) extérieurs et la distance entre les réflecteurs (2, 3) extérieurs étant réglable de telle sorte que les réflecteurs (2, 3) présentent toujours la même distance par rapport au centre géométrique du support de réflecteur (1).

6. Agencement selon la revendication 5 **caractérisé en ce que** le support de réflecteur (1) comporte deux réflecteurs (4, 5) intérieurs fixes disposés à un distance fixe l'un par rapport à l'autre, les réflecteurs (4, 5) intérieurs comportant une distance toujours égale par rapport au centre géométrique du support réflecteur (1).

EP 2 619 527 B1

Fig. 1

Fig. 2

Fig. 3

Fig. 4

14

Fig. 5

Fig. 6

Fig. 7

Fig. 8

Fig. 9

Fig. 10

Fig. 11

Fig. 12

**EP 2 619 527 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5207002 A
- US 2008072444 A1
- US 4691443 A
- DE 69522937 T2